# EUROPEAN PATENT SPECIFICATION

(11) **EP 2 162 297 B1**
(45) Date of publication and mention of the grant of the patent: **19.10.2011**
(21) Application number: 07848783.2
(22) Date of filing: 17.12.2007
(51) Int. Cl.: B60B 33/00, B62B 5/00, B65D 90/18

(54) **RUNNING GEAR**
FAHRGESTELL
ORGANE DE ROULEMENT

(30) Priority: 10.01.2007 HU 0700015
(43) Date of publication of application: 17.03.2010
(73) Proprietor: Racional Mernöki Iroda Kft., 1012 Budapest (HU)
(72) Inventor: REFY, Imre, H-1012 Budapest (HU)
(74) Representative: Kovari, György
(86) International application number: PCT/HU2007/000124
(87) International publication number: WO 2008/084266

(56) References cited:
- WO-A-02/16186
- DE-A1- 19 909 355
- DE-U1- 9 213 417
- DE-U1- 20 216 855
- US-A1- 2005 212 243

## Description

The invention relates to running gear suitable for use with conveyances, which has a frame that can be attached to the conveyance body and wheels are connected to the frame with bearings, wherein the frame has a house falling in line with its median, protruding downwards, having an opening on top and closed at the bottom, and the lower end part of a supporting rod is connected to a bearing running along inside the house at a distance from its internal surface, and the upper end of the supporting rod is taken out through the opening above the frame and is constructed so that it can be connected to the conveyance body.

Self-aligning running gears used with conveyances, such as conveyances for setting theatre stage scenery are known. In most cases they comprise a plate frame and three self-aligning wheels positioned at the vertexes of an equilateral triangle in geometrical top view. From the outside the three sides of the plate frame have a concave profile. The wheels are attached to the frame, and the frame is attached to the conveyance body via bearings with bolts, as a result of which these structural units can be turned around a vertical axis, in a horizontal plane with respect to each other, which results in the self-aligning ability. Conveyances with such running gear can be driven in optional directions on the surface, because the wheels always align in the travelling direction automatically. The disadvantage of such running gears is that if one of the wheels runs on an uneven surface and is forced to rise as compared to the basic surface of the ground, the other wheels also rise above ground lifting up the frame with this and also the loaded conveyance in a given case, and in this way the wheel running on an uneven surface bears the load falling on three wheels. Consequently all wheels need to be rated taking into consideration three times the standard loading.

Patent application US-A-2005/0212243 discloses dolly for supporting a load vertically above a horizontal surface and conveying the load upon the horizontal surface. The dolly has a frame that is attached to a conveyance body and wheels are connected to the frame with bearings. The frame has a house falling in line with its median, protruding downwards, and having an opening on top and being closed at the bottom. The lower end part of the house and the lower end part of a supporting rod is connected to this bearing running along inside the house at a distance from its internal surface. The upper end of the supporting rod is taken out through the opening above the frame and is constructed so that it can be connected to the conveyance body. The disclosed dolly is unsuitable for safe conveyance on an uneven surface.

The task to be solved with the invention is to provide running gear of a type described above, in which, due to its construction, all its wheels remain supported on the ground even when one of the wheels runs on an uneven surface rising above the ground.

The invention is based on the recognition that if the bearing that can be turned only in the horizontal plane and is situated on the frame between the conveyance body and the frame according to the known solution is replaced by a bearing operating as a ball-joint known in itself, and instead of placing it above the plate frame it is positioned deeply below it, in the direct vicinity of the ground, due to the independence of the suspension in space all three wheels of the running gear remain on the ground all the time, even when one of the wheels runs on an uneven surface, therefore the multiple, e.g. triple, over-dimensioning of the wheels becomes unnecessary.

On the basis of the above recognition, in accordance with the invention the set task was solved with a running gear used for conveyances, which has a frame that can be attached to the conveyance body and wheels are connected to the frame with bearings, wherein the frame has a house falling in line with its median, protruding downwards, having an opening on top and closed at the bottom, and the lower end part of a supporting rod is connected to a bearing running along inside the house at a distance from its internal surface, and the upper end of the supporting rod is taken out through the opening above the frame and is constructed so that it can be connected to the conveyance body. The running gear is characterised by that the frame can be attached to the conveyance body in a way enabling the frame to turn around with respect to the body, and the wheels connected to the frame are self-aligning, and the bearing of the supporting rod is self-aligning in all directions and is built in the lower end part of the house.

Generally the frame is constructed in the form of a plate frame; and the running gear has three wheels spaced at identical distances from each other, positioned at the vertexes of an equilateral triangle in geometrical top view.

According to another construction example, favourably the house is formed by a pipe with a circular cross-section.

In accordance with a further feature of the invention the house has a supporting plate attached to the upper end of the house, which supporting plate can be attached to the conveyance body practically with a bolt coupling.

Favourably, the lower end part of the supporting rod is constructed as a cylindrical stud fitting inside the bearing, with a diameter smaller than the part of the supporting rod above it.

Below the invention is described in detail on the basis of the attached drawings showing a known running gear on the one part and also showing a favourable construction of the running gear according to the invention on the other part. In the drawings
- figure 1: shows a traditional self-aligning running gear in schematic top view;
- figure 2a: shows a possible example of using the running gear shown in figure 1, it shows a conveyance body with four running gears in top view,
- figure 2b: shows a view of the conveyance body as in figure 2, from the direction of arrow A shown in this figure;
- figure 3: shows the running gear as in figures 1-2b on a larger scale, while rolling on an even surface;
- figure 4: shows the running gear as in figure 3 while rolling on an uneven surface;
- figure 5a: shows a favourable construction of the self-aligning running gear according to the invention, in schematic top view;
- figure 5b: shows a section taken along line B - B shown in figure 5a, on a larger scale, while the running gear is rolling along an even surface;
- figure 5c: shows the running gear according to figure 5b while it is rolling along an uneven surface;
- figure 6: shows how the wheel of the running gear and the frame belonging to the running gear move as a result of the position shown in figure 5c;
- figure 7: shows a more detailed picture of a favourable construction of the running gear according to the invention on a larger scale, in vertical section, also showing the possible end positions of the displacements;
- figure 8: shows a construction of the running gear according to the invention as in figures 5a-7. on a larger scale, in exploded bottom view.

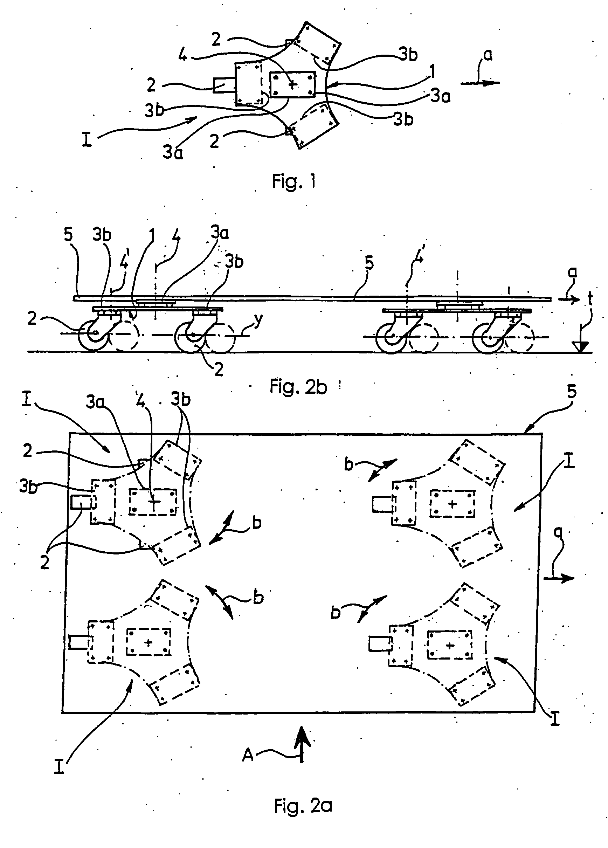

Figure 1 shows a self-aligning running gear known in itself in schematic top view, which has a frame 1 - generally plate frame - three self-aligning wheels 2, a bearing 3b belonging to each wheel 2, and a further central bearing 3a. (It is noted here that in this context "wheel" does not only mean a wheel member in the narrow sense of the word, but also its axle, bearing and block.) The centres of the bearings 3b belonging to the wheels 2 are at a 120° angle with respect to each other, they are below the lower plane of the frame 1, while the central bearing 3a is situated above the lower plane of the frame 1, which is a plate frame in this case. The vertical geometrical axis of the running gear l is marked with reference number 4.

Figures 2a and 2b show a conveyance with a conveyance body 5, which has a rectangular shape in top view and has a self-aligning running gear l in the vicinity of each one of its corners. Figures 2a and 2b show that the individual running gears l, due to their central bearings 3a attached to the lower surface of the plate-shaped conveyance body 5, can rotate around the vertical geometrical axes 4 separately as shown by double arrows b, and all wheels 2 can rotate around their own vertical geometrical axis 4', while the conveyance moves in the direction shown by arrow a. The self-aligning feature is due to this ability of movement; conveyances with such running gears l can be moved in optional directions, because the wheels always align automatically in the travelling direction shown by arrow a. It is noted here that in order to satisfy simple demands the self-aligning wheels 2 as in figure l can also be used as individual running gears.

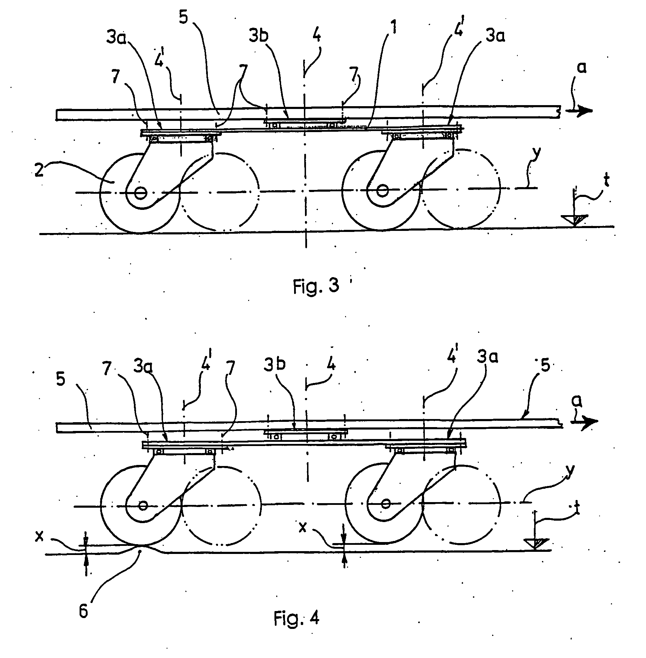

A common fault of this type of known running gears is that if one of the wheels 2 rises with respect to the plane of the ground t, for example, because of an uneven surface or obstacle, the other wheels 2 rise above ground, too. Figure 3 in a larger scale - in which the same reference numbers and signs are used as in figures 1-2b - shows how a conveyance having a conveyance body 5 and equipped with running gears l moves along on flat ground t, for example on the flooring of a stage, while in figure 4 it can be seen clearly that when moving in the travelling direction shown by arrow a one of the rear wheels 2 runs on an uneven surface 6, it is forced to rise by a distance x with respect to the surface of the ground t, which, due to the vertically rigid connection between the central bearing 3b and the conveyance body 5, results in that the other wheels - two in this case - of the running gear l also rise by the same distance x from the surface of the ground t. In other words, if one of the wheels 2 of a traditional running gear l runs on an uneven surface 6, it lifts up the centre of gravity of the whole load above it to the same extent. While moving the conveyance body 5 horizontally this lifting requires extra energy; in this case the conveyance together with the load on it jolts once in proportion with the distance x of the lifting. As a result of this the loading of three wheels 2 falls on the wheel 2 standing on the uneven surface, consequently each wheel 2 needs to be dimensioned taking into consideration a triple overload. In connection with figures 3 and 4 it is noted here that the self-aligning wheels 2 marked with broken lines show the position of the conveyance body 5 while it is moving in the opposite direction with respect to the direction shown by arrow a.

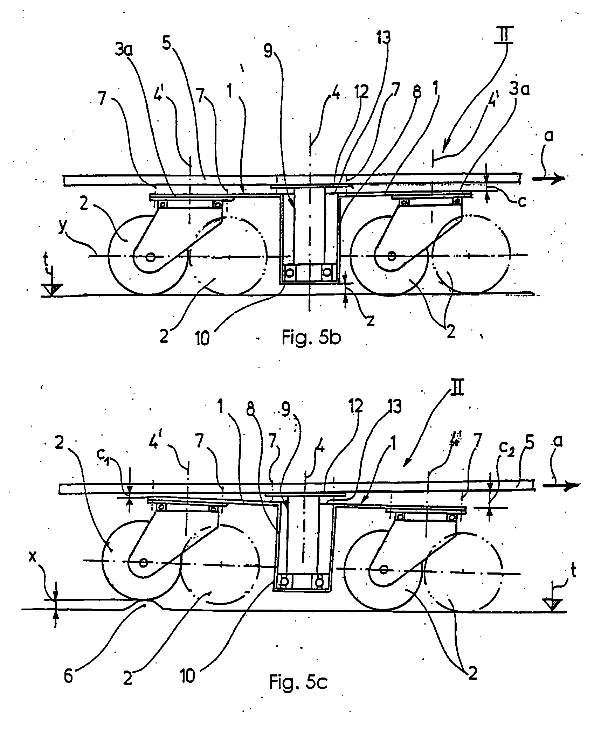

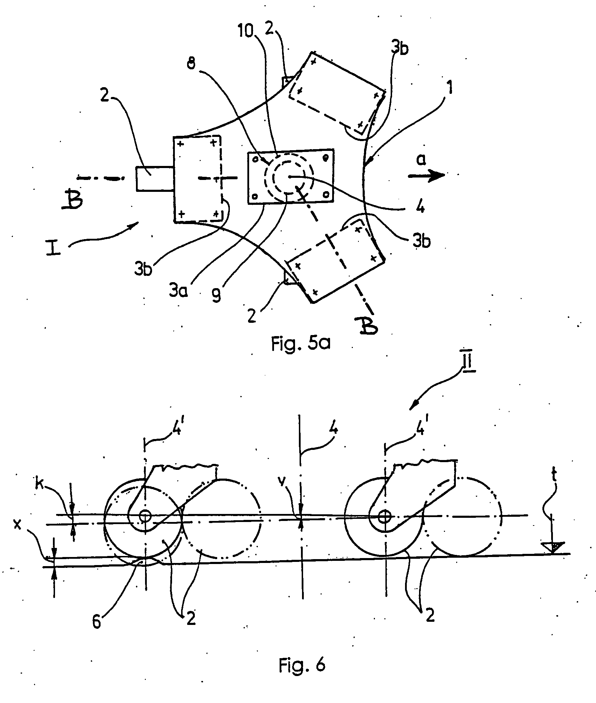

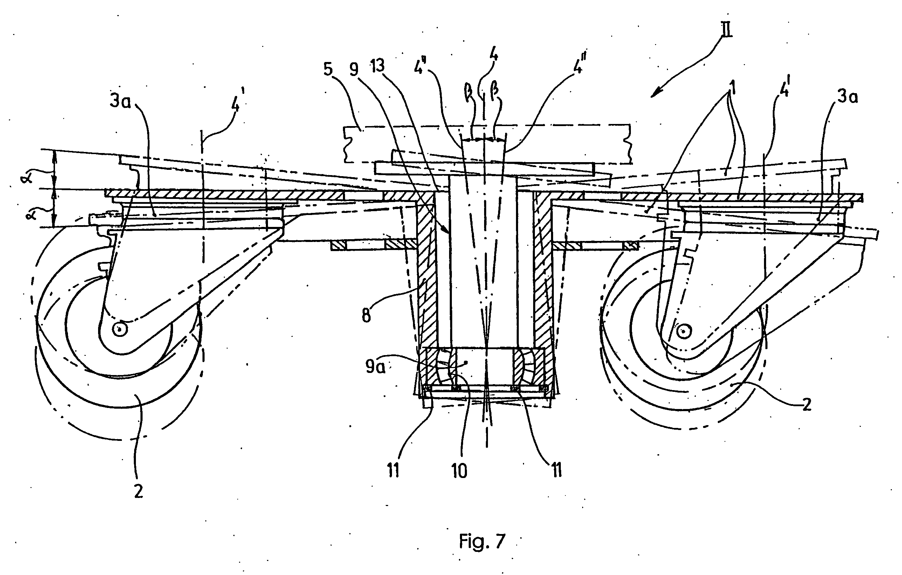

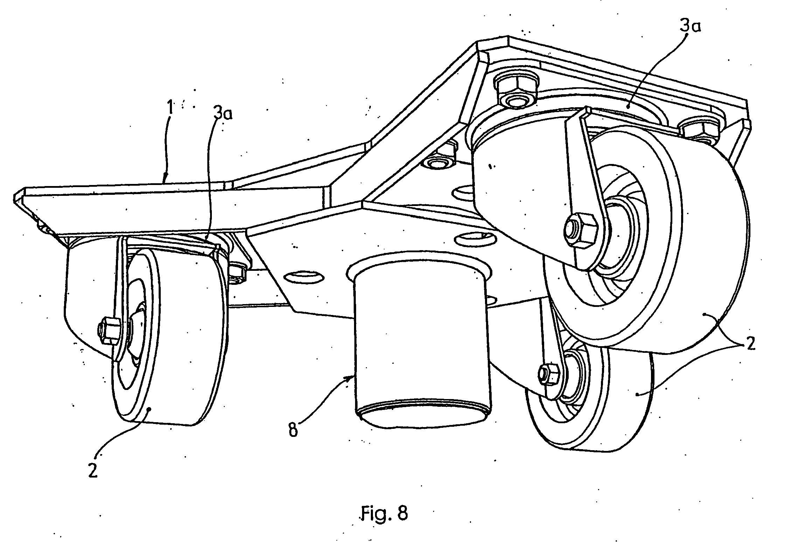

In accordance with the invention the above disadvantage of the running gear l shown in figures 1-4 and other similar known running gears is overcome by replacing its central bearing situated on the frame 1 - plate frame - and rotating only around the vertical geometrical axis 4 of the conveyance body 5 - generally in a horizontal plane -, that is bearing 3b, with a ball joint or a self-aligning bearing operating like a ball joint, which is placed below the lower plane of the frame 1, e.g. plate frame, rather than above its upper plane, practically in the direct vicinity of the ground t as shown in the construction examples according to figures 5a-5c and figures 6-8, where the same reference numbers as in figures 1-4 are used to mark the same structural elements. The self-aligning ball joint type bearing 10 according to this construction example, known in itself, which is shown on a larger scale and in greater detail in figure 7 in vertical cross-section together with the other structural parts of the running gear marked with reference number ll as a whole, is built in the lower part of a house 8 formed by a sleeve pipe with a circular cross-section falling in the vertical geometrical axis 4 of the conveyance body 5 according to this example. The house starts from the central opening 13 made in the plate forming the frame 1, and it ends at a small distance z from the ground t as shown in figure 5b. The distance z is chosen so that the lower end of the house is as close as possible to the ground t, obviously taking into consideration the requirement that the house 8 must not touch the ground t in any possible position of the running gear II.

As it is shown especially in figures 5b, 5c and 7, the bearing 10 is fixed rigidly to the conveyance body 5 via a supporting rod 9 or supporting axle taken through the opening, by inserting a supporting plate 12, for example with a bolt coupling, so that it moves together with it, and obviously the situation is the same with the connection between the frame 1 and the house 8 or with their position with respect to each other: the house 8 moves together with the frame 1. By using the supporting rod 9 or supporting axle it becomes possible to position the machine element working as a ball joint, that is the joint 10 in the direct vicinity of the ground t. This running gear geometry is favourable from the aspect of stability. The supporting rod 9, as it can be seen especially well in figure 7, has a lower end part 9a of a smaller diameter - a cylindrical stud -, and the bearing 10, fixed and secured with ring fasteners in the known way, is directly connected to it.

The connection between the conveyance body 5 and the frame 1 - plate frame - of the running gear ll described above, also including a ball joint type bearing 10 situated in the median of the running gear ll falling in line with the vertical geometrical axis 4, deeply below the frame 1, at the smallest possible z distance from the ground t makes it possible for the conveyance body 5 and the frame 1 - as opposed to the vertically rigid connection of such state-of-the-art running gears shown in figures 3 and 4 - to rotate in every direction with respect to each other.

Figure 5b shows a running gear l according to the invention belonging to a conveyance body 5, while it is moving on flat, horizontal or practically horizontal ground t in the direction shown by arrow a. In this case the axes of the house 8 formed by the sleeve pipe and the supporting rod 9 accommodating it fall in the same line as the vertical geometrical axis 4 of the running gear ll. Obviously the self-aligning wheels 2 can rotate in every direction horizontally. In this position there is the same distance c everywhere between the lower plane of the conveyance body 5 and the upper plane of the frame 1, plate frame.

When according to figure 5c one of the rear wheels 2 runs on an uneven surface 6 while travelling in direction a, due to the independence of the running gear ll in space achieved by attaching it to the conveyance body 5 in accordance with the invention all three wheels 2 remain on the ground t - floor - all the time as the running gear ll is able to follow this change of height, which is obviously due to the fact that the frame 1 can rotate in a vertical plane with respect to the conveyance body 5 in proportion with the height x of the unevenness 6; the extent of this is expressed in figure 5c with the difference of distances c₁ and c₂ calculated from the lower plane of the conveyance body 5 at the two opposite ends of the plate frame 1, and with the deviation upwards and downwards from distance c shown in figure 5b. In this case axis 4" of the house 8 - only shown in figure 7 for the sake of better comprehensibility - is at an angle β to the vertical geometrical central axis 4, that is the median of the running gear ll; the angle β shown in figure 7 indicates the maximum possible angular deviation that can occur in any direction. In figure three the limits of the possible displacements of the plate frame 1 are also shown in broken lines, depending on the extent to which the wheels move upwards when they run on uneven surface. Both the angle α formed by the plate of the frame 1 with the horizontal plane either upwards or downwards and the angle β mentioned above can be, for example, 5°.

In figure 6 the extent of the vertical displacement of the frame 1 of the running gear ll suiting the height x of the uneven surface 6 is marked with reference letter v, while the extent of the same displacement of the wheel 2 is marked with reference letter k.

On comparing figures 4 and 5c it can be seen that in the same cases of operation - that is when one of the wheels 2 runs on an uneven surface 6 - instead of all three wheels 2 only one of the wheels of the running gear ll according to the invention rises up from the floor or ground t, and the centre of gravity of the load rises only in proportion with the extent to which the supporting axle 9 divides the distance between the wheels 2. As a result of this proportionately less pushing force is required for pushing the wheel belonging to the running gear according to the invention on an uneven surface, and in the case of the same extents of unevenness 6 the jolts are also proportionately smaller.

The advantage of the invention is that as all wheels always remain on the ground, there is no need to over-dimension the wheels like in the case of already known running gears of this type - for example triple over-dimensioning in the case of three wheels -, therefore the running gear according to the invention can be produced at a significantly lower cost than traditional structures of this type.

Obviously the invention is not restricted to the embodiment described in detail above, but it can be realised in several different ways within the scope of protection defined by the claims.

## Claims

1. Running gear used for conveyances, which has a frame (1) that can be attached to the conveyance body (5) and wheels (2) which are connected to the frame (1) with bearings (3a), wherein the frame (1) has a house (8) falling in line with its median, protruding downwards, having an opening on top and closed at the bottom, and the lower end part of the house (8), and the lower end part (9a) of a supporting rod (9) is connected to a bearing (10) running along inside the house (8) at a distance from its internal surface, and the upper end of the supporting rod (9) is taken out through the opening (13) above the frame (1) and is constructed so that it can be connected to the conveyance body (5), ***characterised by*** that the frame (1) can be attached to the conveyance body (5) in a way enabling the frame (1) to turn around with respect to the body (5), and the wheels (2) connected to the frame (1) are self-aligning, and the bearing (10) of the supporting rod (9) is self-aligning in all directions and is built in the lower end part of the house (8).

2. Running gear as in claim 1, ***characterised by*** that the frame (1) is constructed as a plate frame.

3. Running gear as in claim 1 or 2, ***characterised by*** that it has three wheels (2) spaced at identical distances from each other, positioned at the vertexes of an equilateral triangle in geometrical top view.

4. Running gear as in any of claims 1-3, ***characterised by*** that the house (8) is formed by a pipe favourably with a circular cross-section.

5. Running gear as in any of claims 1-4, ***characterised by*** that the house (8) has a supporting plate (12) attached to the upper end of the house (8), which supporting plate (12) can be attached to the conveyance body (5) practically with a bolt coupling.

6. Running gear as in any of claims 1-5, ***characterised by*** that the lower end part (9a) of the supporting rod (9) is constructed as a cylindrical stud fitting inside the bearing (10), with a diameter smaller than the part of the supporting rod (9) above it.

## Patentansprüche

1. Fahrgestell, welches für Transporte verwendet wird, welches einen Rahmen (1), welcher an dem Transportkörper (5) befestigt werden kann, und Räder (2), welche mittels Lager (3a) mit dem Rahmen (1) verbunden sind, hat, wobei der Rahmen (1) ein Gehäuse (8) hat, welches mit seinem Mittelteil fluchtet, nach unten gerichtet vorragt, an seiner Oberseite eine Öffnung hat und an der Unterseite geschlossen ist, und wobei das untere Endteil des Gehäuses (8) und das untere Endteil (9a) von einer Haltestange (9) mit einem Lager (10) verbunden sind, welches entlang der Innenseite des Gehäuses (8) mit einer Distanz zu seiner Innenfläche verläuft, und wobei das obere Ende von der Haltestange (9) durch die Öffnung (13) oberhalb des Rahmens (1) herausragt und derart aufgebaut ist, dass es mit dem Transportkörper (5) verbunden werden kann, **dadurch gekennzeichnet, dass** der Rahmen (1) derart an dem Transportkörper (5) befestigt werden kann, dass der Rahmen (1) dazu freigegeben ist, sich mit Bezug auf den Rahmen (1) zu drehen, und die mit dem Rahmen (1) verbundenen Rader (2) selbstausrichtend sind, und das Lager (10) von der Haltestange (9) in allen Richtungen selbstausrichtend ist und in dem unteren Endteil des Gehäuses (8) eingebaut ist.

2. Fahrgestell nach Anspruch 1, **dadurch gekennzeichnet, dass** der Rahmen (1) als ein plattenförmiger Rahmen aufgebaut ist.

3. Fahrgestell nach Anspruch 1 oder 2, **dadurch gekennzeichnet, dass** es drei Räder (2) enthält, welche zueinander identisch beabstandet sind, welche in geometrischer Draufsicht an den Eckpunkten von einem gleichseitigen Dreieck positioniert sind.

4. Fahrgestell nach einem der Anspruche 1 bis 3, **dadurch gekennzeichnet, dass** das Gehäuse (8) durch eine Röhre mit einem vorzugweise kreisförmigen Querschnitt ausgebildet ist.

5. Fahrgestell nach einem der Ansprüche 1 bis 1, **dadurch gekennzeichnet, dass** das Gehäuse (8) eine Halteplatte (12) hat, welche an dem oberen Ende von dem Gehäuse (8) befestigt ist, wobei die Halteplatte (12) vorzugsweise mittels einher Schraubverbindung an dem Transportkörper (5) befestigt werden kann.

6. Fahrgestell nach einem der Ansprüche 1 bis 5, **dadurch gekennzeichnet, dass** das untere Endteil (9a) von der Haltestange (9) als ein zylindrischer Bolzen ausgebildet ist, welcher in das Lager (10) einpasst, welcher einen Durchmesser hat, welcher kleiner als jener des Teils von der Haltestange (9) oberhalb davon ist.

## Revendications

1. Organe de roulement utilisé pour des moyens de transports, lequel comporte un châssis (1) qui peut être fixé au corps (5) du moyen de transport et aux roues (2), lesquelles sont connectées au châssis (1) au moyen de supports (3a), dans lequel le châssis (1) comporte un logement (8) s'alignant avec sa partie centrale, faisant saillie vers le bas, présentant une ouverture au sommet et fermée au niveau du fond, et la partie d'extrémité inférieure du logement (8), et la partie d'extrémité inférieure (9a) d'une tige de support (9) est raccordée à un support (10) le long de l'intérieur du logement (8) à une certaine distance de sa surface intérieure, et l'extrémité supérieure de la tige de support (9) est sortie à travers l'ouverture (13) au-dessus du châssis (1) et est fabriquée de telle sorte qu'elle puisse être raccordée au corps (5) du moyen de transport, **caractérisé en ce que** le châssis (1) peut être fixé au corps (5) du moyen de transport d'une manière permettant au châssis (1) de tourner par rapport au corps (5), et **en ce que** les roues (2) raccordées au châssis (1) sont auto-alignantes, et le support (10) de la tige de support (9) est auto-alignant dans toutes les directions et est construit dans la partie d'extrémité inférieure du logement (8).

2. Organe de roulement selon la revendication 1, **caractérisé en ce que** le châssis (1) est construit sous la forme d'une structure en plaque.

3. Organe de roulement selon la revendication 1 ou 2, **caractérisé en ce qu'**il comporte trois roues (2) espacées selon des distances identiques les unes des autres, positionnées au niveau des sommets d'un triangle équilatéral dans une vue de dessus géométrique.

4. Organe de roulement selon l'une quelconque des revendications 1 à 3, **caractérisé en ce que** le logement (8) est formé par un tube doté, de préférence, d'une section transversale circulaire.

5. Organe de roulement selon l'une quelconque des revendications 1 à 4, **caractérisé en ce que** le logement (8) comporte une plaque de support (12) fixée à l'extrémité supérieure du logement (8), laquelle plaque de support (12) peut être fixée au corps (5) du moyen de transport, d'une façon pratique, à l'aide d'un assemblage par boulons.

6. Organe de roulement selon l'une quelconque des revendications 1 à 5, **caractérisé en ce que** la partie d'extrémité inférieure (9a) de la tige de support (9) est construite sous la forme d'un goujon cylindrique s'ajustant à l'intérieur du support (10), présentant un diamètre plus petit que celui de la partie de la Lige de support (9) placée au-dessus de lui.
